# EUROPEAN PATENT SPECIFICATION

(11) **EP 3 114 896 B1**
(45) Date of publication and mention of the grant of the patent: **12.08.2020**
(21) Application number: 15757775.0
(22) Date of filing: 06.02.2015
(51) Int. Cl.: H04W 8/00, H04M 1/725, G06F 1/16

(54) **APPARATUS AND METHOD OF IDENTIFYING A WIRELESS DOCKING STATION**
VORRICHTUNG UND VERFAHREN ZUR IDENTIFIZIERUNG EINER DRAHTLOSEN ANDOCKSTATION
APPAREIL ET PROCÉDÉ PERMETTANT D'IDENTIFIER UNE STATION D'ACCUEIL SANS FIL

(30) Priority: 06.03.2014 US 201414198865
(43) Date of publication of application: 11.01.2017
(73) Proprietor: Intel IP Corporation, Santa Clara, CA 95054 (US)
(72) Inventor: PENTELKA, Paz, 42524 Netanya (IL); DAVIDSON, Tal, 58456 Holon (IL); LEVY, Elad, 75238 Rishon LeZion (IL); GLIK, Michael, 44539 Kfar Saba (IL); GAL, Yoav, 48805 Einat (IL)
(74) Representative: Rooney, John-Paul
(86) International application number: PCT/US2015/014701
(87) International publication number: WO 2015/134146

(56) References cited:
- EP-A1- 2 607 982
- US-A1- 2011 098 087
- US-A1- 2013 311 693
- US-A1- 2013 326 104
- US-A1- 2013 344 812
- US-A1- 2014 059 264
- US-B1- 8 254 992
- Anonymous: "Technisat DIGIT MF4-S Bedienungsanleitung", , 17 November 2005 (2005-11-17), XP055156488, Retrieved from the Internet: URL:https://www.technisat.com/assetsFS/dow nloads/assets/medias/docus/22/bda_digit_MF 4-S_MTV_unlimited_001.pdf [retrieved on 2014-12-03]

## Description

### TECHNICAL FIELD

Embodiments described herein generally relate to identifying a wireless docking station.

### BACKGROUND

Mobile platforms are becoming smaller and smaller, and typically have decreasingly smaller screens and less Input/Output (IO) ports from generation to generation.

Docking stations are commonly used nowadays to extend the IO port array of the mobile platforms, and provide a convenient means for a mobile platform to hook up to a static variety of peripheral devices ("peripherals"), such as displays, monitors, external storage devices, external Hard Disk Drives (HDD), a mouse, keyboards, webcams, communication devices, and the like.

A docking device (also referred to as "docking station") may typically be placed on a table, while being permanently connected to the peripherals, and the user may connect the mobile platform to the docking station ("dock") to utilize the peripherals.

A wireless docking station may enable the user to connect, in a wireless manner, the mobile platform to the wireless docking station, for example, to enable the mobile device to utilize the peripherals

US 2013/0311693 discloses a docking system in which a dockee docks with a docking host to make use of peripheral devices.

### SUMMARY OF THE DISCLOSURE

The invention is set out in the appended claims.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative embodiments.
Fig. 2 is a schematic illustration of a user interface, in accordance with some demonstrative embodiments.
Fig. 3 is a schematic illustration of a sequence diagram demonstrating operations and interactions between a mobile device and a wireless docking station, in accordance with some demonstrative embodiments.
Fig. 4 is a schematic illustration of an information element, in accordance with some demonstrative embodiments.
Fig. 5 is a schematic illustration of a system deployment, in accordance with some demonstrative embodiments.
Fig. 6 is a schematic flow chart illustration of a method of identifying a wireless docking station, in accordance with some demonstrative embodiments.
Fig. 7 is a schematic illustration of a product of manufacture, in accordance with some demonstrative embodiments.

### DETAILED DESCRIPTION

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one embodiment", "an embodiment", "demonstrative embodiment", "various embodiments" etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some embodiments may be used in conjunction with various devices and systems, for example, a Personal Computer (PC), a desktop computer, a mobile computer, a laptop computer, a notebook computer, a docking device, a tablet computer, an Ultrabook™ computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with devices and/or networks operating in accordance with existing Wireless-Gigabit-Alliance (WGA) specifications *(*Wireless Gigabit Alliance, Inc WiGig MAC and PHY Specification Version 1.1, April 2011, Final specificati*on)* and/or future versions and/or derivatives thereof, devices and/or networks operating in accordance with existing IEEE 802.11 standards *(*IEEE 802.11-2012, IEEE Standard for Information technology--Telecommunications and information exchange between systems Local and metropolitan area networks--Specific requirements Part 11: Wireless LAN Medium Access Control (MAC) and Physical Layer (PHY) Specifications, March 29, 2012*;* IEEE802.11 task group ac (TGac) ("IEEE802.11-0910308r12 - TGac Channel Model Addendum Document*");* IEEE 802.11 task group ad (TGad) (IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60GHz Band, 28 December, 2012*))* and/or future versions and/or derivatives thereof, devices and/or networks operating in accordance with existing and/or Wireless Fidelity (WiFi) Alliance (WFA) Peer-to-Peer (P2P) specifications *(*WiFi P2P technical specification, version 1.2, 2012*),* and/or future versions and/or derivatives thereof, devices and/or networks operating in accordance with existing WirelessHD™ specifications and/or future versions and/or derivatives thereof, units and/or devices which are part of the above networks, and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

The term "wireless device", as used herein, includes, for example, a device capable of wireless communication, a communication device capable of wireless communication, a communication station capable of wireless communication, a portable or non-portable device capable of wireless communication, or the like. In some demonstrative embodiments, a wireless device may be or may include a peripheral that is integrated with a computer, or a peripheral that is attached to a computer. In some demonstrative embodiments, the term "wireless device" may optionally include a wireless service.

The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device.

Some demonstrative embodiments may be used in conjunction with a WLAN. Other embodiments may be used in conjunction with any other suitable wireless communication network, for example, a wireless area network, a "piconet", a WPAN, a WVAN and the like.

The term "antenna", as used herein, may include any suitable configuration, structure and/or arrangement of one or more antenna elements, components, units, assemblies and/or arrays. In some embodiments, the antenna may implement transmit and receive functionalities using separate transmit and receive antenna elements. In some embodiments, the antenna may implement transmit and receive functionalities using common and/or integrated transmit/receive elements. The antenna may include, for example, a phased array antenna, a single element antenna, a set of switched beam antennas, and/or the like.

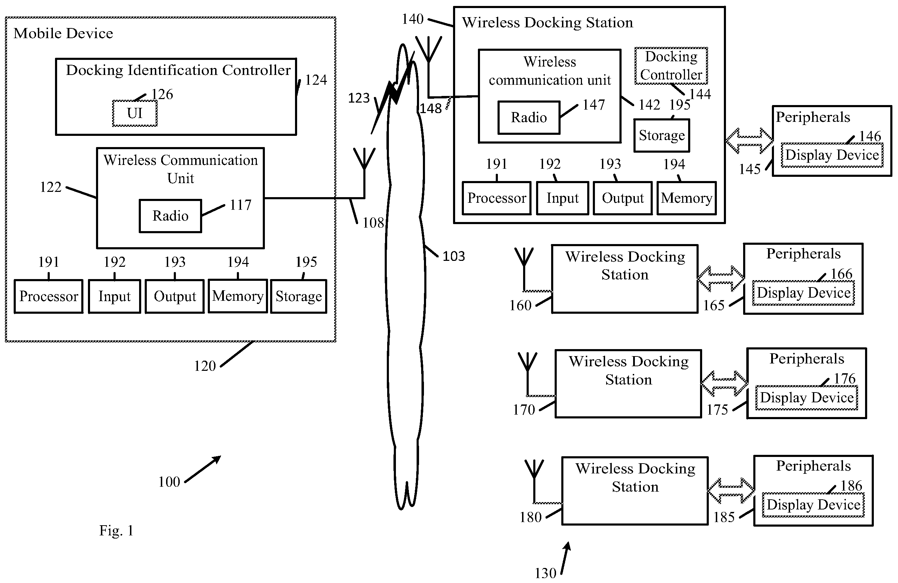

Reference is now made to Fig. 1, which schematically illustrates a block diagram of a system 100, in accordance with some demonstrative embodiments.

As shown in Fig. 1, in some demonstrative embodiments, system 100 may include one or more wireless communication devices, e.g., including wireless communication devices 120, 140, 160, 170, and/or 180, capable of communicating content, data, information and/or signals over a wireless communication medium 103, for example, a radio channel, an IR channel, a RF channel, a Wireless Fidelity (WiFi) channel, and the like. One or more elements of system 100 may optionally be capable of communicating over any suitable wired communication links.

In some demonstrative embodiments, wireless communication devices 120, 140, 160, 170, and/or 180 may include wireless communication units to perform wireless communication between wireless communication devices 120, 140, 160, 170, and/or 180 and/or with one or more other wireless communication devices. For example, wireless communication device 120 may include a wireless communication unit 122, and/or wireless communication device 140 may include a wireless communication unit 142.

In some demonstrative embodiments, the wireless communication units may include one or more radios. For example, wireless communication unit 122 may include a radio 117 and/or wireless communication unit 142 may include a radio 147. In one example, radios 117 and/or 147 may include one or more wireless transmitters, receivers and/or transceivers able to send and/or receive wireless communication signals, RF signals, frames, blocks, transmission streams, frames, messages, data items, and/or data. In one example, the radios may include modulation elements, demodulation elements, amplifiers, analog to digital and digital to analog converters, filters, and/or the like. For example, wireless communication units 122 and/or 142 may include or may be implemented as part of a wireless Network Interface Card (NIC), and the like.

In some demonstrative embodiments, the wireless communication units may include, or may be associated with, one or more antennas. For example, wireless communicate unit 122 may be associated with one or more antennas 108, and/or wireless communicate unit 142 may be associated with one or more antennas 148.

Antennas 108 and/or 148 may include any type of antennas suitable for transmitting and/or receiving wireless communication signals, blocks, frames, transmission streams, frames, messages and/or data. For example, antennas 108 and/or 148 may include any suitable configuration, structure and/or arrangement of one or more antenna elements, components, units, assemblies and/or arrays. Antennas 108 and/or 148 may include, for example, antennas suitable for directional communication, e.g., using beamforming techniques. For example, antennas 108 and/or 148 may include a phased array antenna, a multiple element antenna, a set of switched beam antennas, and/or the like. In some embodiments, antennas 108 and/or 148 may implement transmit and receive functionalities using separate transmit and receive antenna elements. In some embodiments, antennas 108 and/or 148 may implement transmit and receive functionalities using common and/or integrated transmit/receive elements.

In some demonstrative embodiments, wireless communication devices 120, 140, 160, 170, and/or 180 may also include, for example, a processor 191, an input unit 192, an output unit 193, a memory unit 194, and a storage unit 195. Wireless communication devices 120, 140, 160, 170, and/or 180 may optionally include other suitable hardware components and/or software components. In some demonstrative embodiments, some or all of the components of wireless communication devices 120, 140, 160, 170, and/or 180 may be enclosed in a common housing or packaging, and may be interconnected or operably associated using one or more wired or wireless links. In other embodiments, components of wireless communication devices 120, 140, 160, 170, and/or 180 may be distributed among multiple or separate devices.

Processor 191 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. For example, processor 191 executes instructions, for example, of an Operating System (OS) of device 120 and/or of one or more suitable applications.

Memory unit 194 may include, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 may include, for example, a hard disk drive, a floppy disk drive, a Compact Disk (CD) drive, a CD-ROM drive, a DVD drive, or other suitable removable or non-removable storage units. For example, memory unit 194 and/or storage unit 195, for example, may store data processed by device 120.

Input unit 192 may include, for example, a keyboard, a keypad, a mouse, a touch-screen, a touch-pad, a track-ball, a stylus, a microphone, or other suitable pointing device or input device. Output unit 193 may include, for example, a monitor, a screen, a touch-screen, a flat panel display, a Cathode Ray Tube (CRT) display unit, a Liquid Crystal Display (LCD) display unit, a plasma display unit, one or more audio speakers or earphones, or other suitable output devices.

In some demonstrative embodiments, system 100 may include a mobile device and plurality of wireless docking stations 130. For example, device 120 may perform the functionality of the mobile device, and/or devices 140, 160, 170 and/or 180 may perform the functionality of a wireless docking station.

In some demonstrative embodiments, mobile device 120 may include, for example, a User Equipment (UE), a mobile computer, a laptop computer, a notebook computer, a tablet computer, an Ultrabook™ computer, a mobile internet device, a handheld computer, a handheld device, a storage device, a PDA device, a handheld PDA device, an on-board device, an off-board device, a hybrid device, a consumer device, a vehicular device, a non-vehicular device, a portable device, a mobile phone, a cellular telephone, a PCS device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), an "Origami" device or computing device, a video device, an audio device, an A/V device, a gaming device, a media player, a Smartphone, or the like.

In some demonstrative embodiments, a docking station of wireless docking stations 140, 160, 180 and/or 170 may be connected to one or more peripherals. For example, wireless docking station 140 may be connected to peripherals 145, wireless docking station 160 may be connected to peripherals 165, wireless docking station 170 may be connected to peripherals 175, and/or wireless docking station 180 may be connected to peripherals 185.

In some demonstrative embodiments, peripherals 145, 165, 175 and/or 185 may include, for example, a display, a keyboard, a mouse, one or more loudspeakers, a Universal Serial Bus (USB) hub, an external storage, and/or the like.

In some demonstrative embodiments, wireless docking stations 140, 160, 170 and/or 180 may be configured to provide one or more functionalities to a mobile device, e.g., device 120, in a wireless manner. For example, wireless docking stations 140, 160, 170 and/or 180 may enable mobile device 120 to utilize the peripherals and to use one or more functionalities associated with the peripherals in a wireless manner.

In one example, peripherals 145 may include an external printer and an external storage. According to this example, mobile device 120 may be able to utilize the external printer, for example, to print one or more documents stored on mobile device 120; and/or to utilize the external storage to store one or more files of mobile device 120.

In another example, peripherals 145 may include an external display, a keyboard, and a mouse. According to this example, mobile device 120 may be able to utilize the external display, e.g., to display video content, to utilize one or more functionalities of the display, e.g., to adjust one or more picture attributes, for example, a color, a brightness and/or a hue, and to utilize the keyboard and/or the mouse to edit the video on the display.

In some demonstrative embodiments, peripherals 145, 165, 175 and/or 185 may include a display device. For example, peripherals 145 may include a display device 146, peripherals 165 may include a display device 166, peripherals 175 may include a display device 176, and/or peripherals 185 may include a display device 186.

In some demonstrative embodiments, peripherals 145, 165, 175 and/or 185 may be implemented as part of wireless docking stations 140, 160, 170 and/or 180, respectively. For example, wireless docking station 140 may be implemented as part of a wireless display 146.

In other embodiments, peripherals 145, 165, 175 and/or 185 may be implemented as a separate element, which is connected to wireless docking stations 140, 160, 170 and/or 180, respectively. For example, wireless docking station 140 may be implemented as a separate element within a box and/or a case, and peripherals 125 may include an external display, external keyboard and/or an external mouse connected to wireless docking station 140.

In other embodiments, one or more devices of peripherals 145, 165, 175 and/or 185 may be implemented as a separate element and/or as part of wireless docking stations 140, 160, 170 and/or 180, respectively. For example, wireless docking station 140 may be implemented as part of wireless display 146, and peripherals 145 may include an external keyboard and/or an external mouse connected to display 146.

In some demonstrative embodiments, wireless docking stations 140, 160, 170 and/or 180 may be located at a close proximity to each other. For example, the plurality of wireless docking stations 130 may be located within a relatively small environment and/or area, e.g., a class, a laboratory, a hotel business/convention center, an office, a room, a shared open space, and/or the like.

In one example, the plurality of wireless docking stations 130 may enable a plurality of users, e.g., visitors of a convention, to utilize peripherals 145, 165, 175 and/or 185. For example, a first visitor may approach wireless docking station 160 to utilize peripherals 165, for example, to display content from a Smartphone of the first visitor on display device 166; and/or a second visitor may approach wireless docking station 170 to utilize peripherals 175, for example, to send an Email from an Email application installed on a Smartphone utilizing display device 176, and a keyboard and a mouse of peripherals 175.

In some demonstrative embodiments, a user of mobile device 120 may connect to wireless docking station 140, for example, to utilize one or more functionalities of peripherals 145.

In some demonstrative embodiments, radio 117 and radio 147 may be configured to establish a wireless communication link 123 over WM 103 to connect between mobile device 120 and wireless docking station 140, for example, to display video from mobile device 120 on display device 146.

In some demonstrative embodiments, wireless communication link 123 may include a WiFi communication link.

In some demonstrative embodiments, wireless communication link 123 may include a peer-to-peer (P2P) communication link.

In some demonstrative embodiments, wireless communication link 123 may include a millimeter-wave (mmwave) wireless communication link.

In other embodiments, wireless communication link 123 may include any other wireless communication link.

In some demonstrative embodiments, establishing wireless communication link 123 may include pairing between mobile device 120 and wireless docking station 140.

In some demonstrative embodiments, the pairing between mobile device 120 and wireless docking station 140 may include a Wireless Protected Setup (WPS) pairing. For example, the user of mobile device 120 may be required to enter a Personal Identification Number (PIN) to pair between mobile device 120 and wireless docking station 140.

In some demonstrative embodiments, the pairing between mobile device 120 and wireless docking station 140 may include a Pre-Shared-Key (PSK) passphrase pairing. For example, the user of mobile device 120 may be required to enter a pre-defined passphrase both at wireless docking station 140 and at mobile device 120 to pair between mobile device 120 and wireless docking station 140.

In some demonstrative embodiments, the pairing between mobile device 120 and wireless docking station 140 may include any other pairing method, e.g. a push-button method.

In some demonstrative embodiments, the user may select wireless docking station 140 from a list of a plurality of wireless docking stations, which may be detected during a scanning operation of mobile device 120.

For example, the user of mobile device 120 may enter a convention center, in which the plurality of wireless docking stations 130 are deployed. Wireless communication unit 122 may scan for wireless docking stations and may display, e.g., on a display of mobile device 120, a list of a plurality of wireless docking stations detected during the scanning. For example, wireless communication unit 122 may display one or more of the plurality wireless docking stations 130. In one example, wireless communication unit 122 may display wireless docking stations 140, 160, 170 and 180, for example, if all of the plurality of wireless docking stations 130 are detected during the scanning. In another example, wireless communication unit 122 may display wireless docking stations 140 and 160, for example, if only wireless docking stations 140 and 160 are detected during the scanning.

In some demonstrative embodiments, the user may not be able to identify a physical location of wireless docking station 140 out of the physical locations of the plurality of wireless docking stations 130, for example, if wireless docking station 140 is not identified.

In some demonstrative embodiments, the user may not be able to match between the list of the plurality of wireless docking stations detected during the scanning, and wireless docking stations 140, 160, 170 and 180, for example, if wireless docking stations 140, 160, 170 and 180 are not identified.

In one example, the plurality of wireless docking stations 130 may be deployed in the convention center, for example, such that wireless docking station 140 is at a north corner of the convention center, wireless docking station 160 is at a south corner of the convention center, wireless docking station 170 is at a west corner of the convention center, and/or wireless docking station 180 is at an east corner of the convention center. Wireless communication unit 122 may scan for wireless docking stations, for example, when the user of mobile device 120 enters the convention center, and may display a list including the plurality of wireless docking stations 130, which was detected during the scanning. The user of mobile device 120 may approach the north corner to utilize peripherals 145 of wireless docking station 140. According to this example, the user may not be able to select wireless docking station 140 from the list of the plurality of wireless docking stations 130 and may not be able to pair mobile device 120 with wireless docking station 140 to utilize peripherals 145, for example, if the user of mobile device 120 does not identify wireless docking station 140 in the list of detected docking stations.

Some demonstrative embodiments may enable the user of mobile device 120 to identify wireless docking station 140.

Some demonstrative embodiments may enable the user of mobile device 120 to identify each of the plurality of wireless docking stations 130.

In some demonstrative embodiments, mobile device 120 may include a docking identification controller 124 to control the identification of one or more of the plurality of wireless docking stations 130.

In one example, docking identification controller 124 may be implemented as part of an operating system (OS) of mobile device 120.

In another example, docking identification controller 124 may include software, e.g., an application, installed on mobile device 120.

In another example, docking identification controller 124 may be part of a firmware of mobile device 120.

In another example, docking identification controller 124 may include any other combination of software, hardware and/or firmware of mobile device 120.

In some demonstrative embodiments, docking identification controller 124 may include a user interface 126 configured to provide the user with a list of a plurality of wireless docking stations detected during scanning. For example, user interface may provide the user a list of the plurality of wireless docking stations 130.

In some demonstrative embodiments, user interface 126 may receive from the user of mobile device 120 an instruction to request identification from at least one wireless docking station from the list. For example, user interface 126 may receive from the user an instruction to request identification from wireless docking station 140.

In some demonstrative embodiments, user interface 126 may include a graphical user interface (GUI) of docking identification controller 124.

In some demonstrative embodiments, the GUI may include the list of the plurality of wireless docking stations detected during scanning. For example, the list may include wireless docking stations 140, 160, 170 and/or 180.

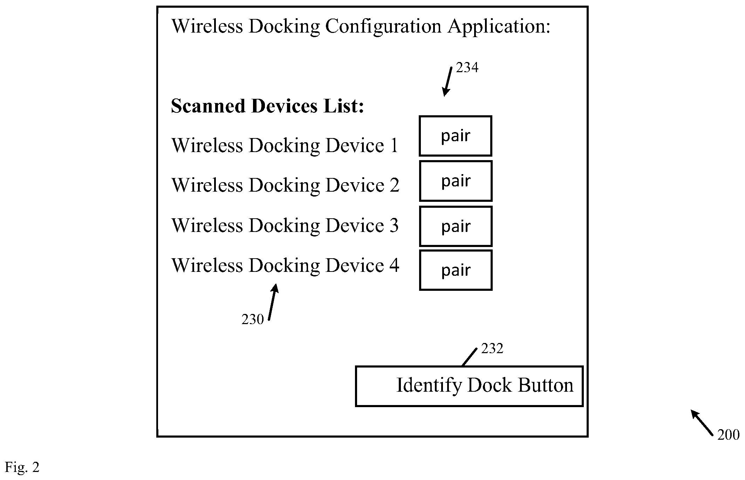

In some demonstrative embodiments, the GUI may include a request to identify button to receive the instruction from the user of mobile device 120, e.g., as described below with reference to Fig. 2.

In some demonstrative embodiments, radio 117 may transmit a request to identify message to wireless docking station 140.

In some demonstrative embodiments, the request to identify message may be configured to request wireless docking station 140 to display an identification message including an identification of wireless docking station 140.

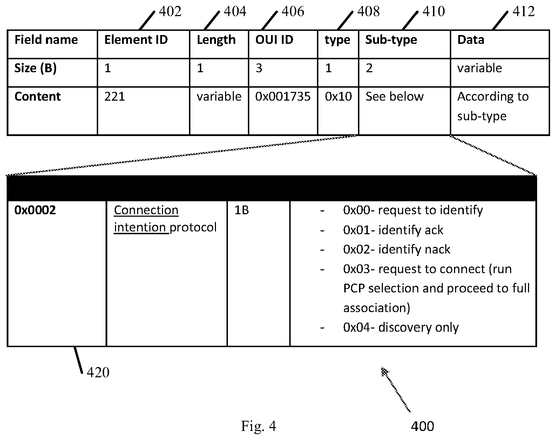

In some demonstrative embodiments, radio 117 may transmit to wireless docking station 140 a probe request including the request to identify message, e.g., as described below with reference to Fig. 4.

In some demonstrative embodiments, radio 117 may transmit the request to identify message prior to pairing between mobile device 120 and wireless docking station 140.

In some demonstrative embodiments, radio 147 may receive the request to identify message from mobile device 120.

In some demonstrative embodiments, radio 147 may receive the request to identify message in the probe request from mobile device 120.

In some demonstrative embodiments, wireless docking station 140 may include a docking controller 144 to control the identification of wireless docking station 140.

In some demonstrative embodiments, in response to the request to identify message, docking controller 144 may cause display device 146 to display the identification message including the identification of wireless docking station 140. For example, docking controller 144 may cause display device 146 to display a text message on display device 146 including the identification of wireless docking station 140.

In some demonstrative embodiments, the identification message may include a Service Set Identifier (SSID) of wireless docking station 140, for example, if wireless communication link 123 includes a WiFi communication link.

In some demonstrative embodiments, the identification message may include a Peer to Peer (P2P) device name of wireless docking station 140, for example, if wireless communication link 123 includes a P2P communication link.

In some demonstrative embodiments, radio 147 may transmit to mobile device 120 an identify acknowledgement in response to the request to identify message.

In some demonstrative embodiments, radio 147 may transmit to mobile device 120 a probe response including the identify acknowledgement, e.g., as described below with reference to Fig. 4.

In some demonstrative embodiments, radio 117 may receive the identify acknowledgement from wireless docking station 140, e.g., in response to the request to identify message.

In some demonstrative embodiments, radio 117 may receive the identify acknowledgement in the probe response from wireless docking station 140.

In some demonstrative embodiments, the identification message may include a pairing key to pair between wireless docking station 140 and mobile device 120. For example, the identification message may include a PIN to be entered at mobile device 120 to pair between wireless docking station 140 and mobile device 120.

In some demonstrative embodiments, the user of mobile device 120 may enter the pairing key via user interface 126.

In some demonstrative embodiments, radio 117 may transmit to wireless docking station 140 a pairing request including the pairing key entered by the user.

In some demonstrative embodiments, radio 147 may receive the pairing request from mobile device 120.

In some demonstrative embodiments, radio 147 may receive the pairing request subsequent to the displaying of the identification message on display device 146.

In some demonstrative embodiments, docking controller 144 may compare the pairing key in the pairing request with the pairing key in the identification message; and may associate and connect between wireless docking station 140 and mobile device 120, for example, if the pairing keys match.

In some demonstrative embodiments, wireless docking station 140 may be in a power save mode. For example, display device 124 may be powered off or at a power save mode.

In one example, wireless docking station 140 may be at the power save mode, for example, if wireless docking station 140 is not being used for a relatively long period of time.

In another example, wireless docking station 140 may be at the power save mode, for example, if one or more of peripherals 145 are turned off 140, e.g., display device 146, a printer and/or any other peripherals of peripherals 145 are turned off or at a power save mode.

In some demonstrative embodiments, docking controller 144 may cause display device 146 to display the identification message upon a powering-up of wireless docking station 140.

In one example, docking controller 144 may cause display device 146 to display the identification message, for example, if display device 146 is turned on from power off, or switched from the power save mode to an active mode.

In some demonstrative embodiments, the user of mobile device 120 may request to identify more than one, e.g., all, wireless docking station of the plurality of wireless docking stations 130.

For example, the plurality of wireless docking stations 130 may be deployed in a library such that wireless docking stations 140, 160, 170 and 180 are arranged in proximity to one another, e.g., in a line or any other arrangement. According to this example, the user of mobile device 120 may request each of wireless docking stations 140, 160, 170 and 180 to be identified, for example, to enable the user to select to which one of wireless docking stations 140, 160, 170 and 180 device 120 is to be paired and/or connected.

In some demonstrative embodiments, docking identification controller 144 may display the list of the wireless docking stations detected during scanning, and, responsive to the instruction to request identification, radio 117 may transmit a plurality of request to identify messages to the plurality of wireless docking stations 130. For example, radio 117 may transmit a first request to identify message to wireless docking station 140 to identify wireless docking station 140, a second request to identify message to wireless docking station 160 to identify wireless docking station 160, a third request to identify message to wireless docking station 170 to identify wireless docking station 170, and/or a fourth request to identify message to wireless docking station 180 to identify wireless docking station 180.

In some demonstrative embodiments, wireless docking stations 140, 160, 170 and 180 may receive the first, second, third and fourth request to identify messages and may display an identification message to identify wireless docking stations 140, 160, 170 and 180, respectively. For example, wireless docking station 140 may display a first identification message on display device 146 to identify wireless docking station 140, wireless docking station 160 may display a second identification message on display device 166 to identify wireless docking station 160, wireless docking station 170 may display a third identification message on display device 176 to identify wireless docking station 170, and/or wireless docking station 180 may display a fourth identification message on display device 186 to identify wireless docking station 180.

In some demonstrative embodiments, displaying the first, second, third and/or forth identification messages ("the identification messages") may enable the user of mobile device 120 to identify wireless docking stations 140, 160, 170 and 180 and to select to which wireless docking station of wireless docking station 140, 160, 170 and 180 device 120 is to connect.

In some demonstrative embodiments, displaying the identification messages by docking stations 130 may enable an improved user experience of the user of mobile device 120. For example, if the identification messages are not displayed by docking stations, the user of mobile device 120 may have to go through a trial-and-error process, in order to be able to identify and select a wireless docking station to be paired to. This trial-and-error process may result in user frustration and/or a degraded user experience.

In some demonstrative embodiments, placing physical identifiers onto docking devices 130, for example, by placing labels, stickers and/or signs to identify the wireless docking stations may be cumbersome and/or non-effective. For example, placing labels one each of docking stations 130 may be costly; may not be aesthetic; may lead to errors, for example, if a label is misplaced; may require updating and/or replacing the labels, for example, upon a change in an installation and/or a setup of the wireless docking stations, and/or if the labels become illegible. Accordingly, using thee physical labels may increase overhead of information technology (IT) personnel. Therefore, using the physical labels may be inferior compared to displaying the identification messages by docking stations 130.

In some demonstrative embodiments, displaying the identification messages by docking stations 130, e.g., as described above, may enable the user of mobile device 120 to identify, pair and connect to a wireless docking station, which does not appear in the scan list, e.g., if the wireless docking station is configured to be "manual".

In some demonstrative embodiments, the user of mobile device 120 may assign a profile name to one or more wireless docking stations. For example, the user may assign the profile name "the north docking station" to wireless docking station 140, and/or the name "the south docking station" to wireless docking station 160.

In some demonstrative embodiments, user interface 126 may display a scan list including the identification of wireless docking station 140 and the profile name assigned by the user to wireless docking station 140.

For example, user interface 126 may display the scan list including the SSID of wireless docking station 140 and the profile name "the north docking station" at the same line in the scan list, e.g., as described below.

Reference is made to Fig. 2, which schematically illustrates a user interface 200, in accordance with some demonstrative embodiments. For example, user interface 200 may perform the functionality of user interface 126.

As shown in Fig. 2, user interface 200 may display a scan list 230 of wireless docking stations detected during scanning.

As shown in Fig. 2, scan list 230 may include identifications of wireless docking stations detected during scanning. For example, scan list 230 may display an SSID or a device name of wireless docking stations 140, 160, 170 and/or 180 (Fig. 1).

In some demonstrative embodiments, scan list 230 may include the profile name of one or more of the wireless docking stations in addition to, or instead of, the identifications of one or more wireless docking stations.

As shown in Fig. 2, user interface 200 may include a request to identify button 232 to enable a user to request to identify the wireless docking stations detected during scanning.

As shown in Fig. 2, user interface 200 may include pairing buttons 234, for example, a pair button for each of the wireless docking stations detected during scanning.

In some demonstrative embodiments, the user of mobile device 120 (Fig. 1) may press identify button 232 to request identification from the wireless docking stations detected during scanning.

In some demonstrative embodiments, the user of mobile device 120 (Fig. 1) may identify the wireless docking stations based on the identification messages displayed on a display of the wireless docking stations, and may select to which of the wireless docking stations listed in scan list 230 to connect.

In some demonstrative embodiments, the user may press the pair button of the selected wireless docking station to associate mobile device 120 (Fig. 1) with the selected wireless docking station.

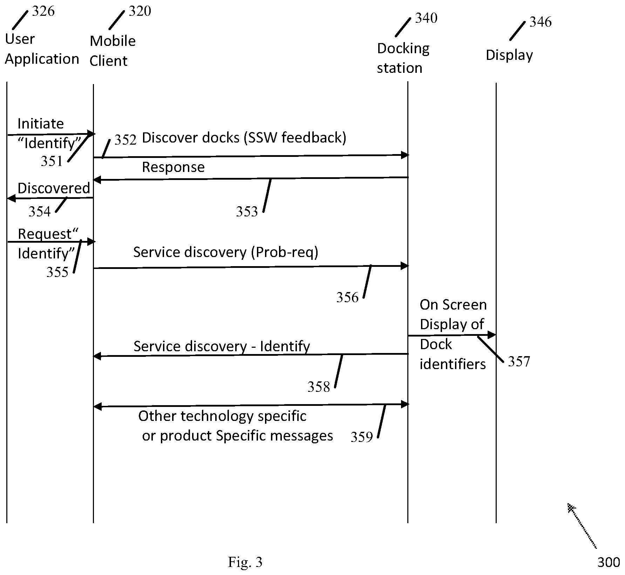

Reference is made to Fig. 3, which schematically illustrates a sequence diagram 300, which demonstrates operations and interactions between a mobile device 320 and a wireless docking station 340, in accordance with some demonstrative embodiments. For example, mobile device may perform the functionality of mobile device 120 (Fig. 1) and/or wireless docking station 340 may perform the functionality of wireless docking station 140 (Fig. 1).

As shown in Fig. 3, a user interface 326 of mobile device 320 may initiate (351) a scanning procedure to detect one or more wireless docking stations. For example, user interface 326 may perform the functionality of user interface 200 (Fig. 2).

As shown in Fig. 3, mobile device 340 may perform a sector scan (352) to detect one or more wireless docking stations. For example, mobile device 120 (Fig. 1) may perform the scanning to detect the plurality of wireless docking stations 130 (Fig. 1).

As shown in Fig. 3, wireless docking station 340 may transmit a response 353 to mobile device 340, for example, if wireless docking station 340 is discovered by mobile device 320. For example, wireless docking station 140 (Fig. 1) may transmit a response to mobile device 120 (Fig. 1), for example, if wireless docking station 140 (Fig. 1) is discovered during the scanning.

As shown in Fig. 3, mobile device 320 may indicate (354) to user interface 326 that wireless docking station 340 is discovered. For example, docking identification controller 144 (Fig. 1) may cause user interface 126 (Fig. 1) to display the list of the detected wireless docking stations, e.g., as described above.

As shown in Fig. 3, a user of mobile device 320 may instruct (355) mobile device 320 to request identification of wireless docking station 340. For example, a user of mobile device 120 (Fig. 1) may utilize user interface 126 (Fig. 1) to request identification of wireless docking station 140 (Fig. 1), e.g., as described above.

As shown in Fig. 3, mobile device 320 may send a request to identify message (356) to docking station 340, e.g., as part of a probe request message. For example, mobile device 120 (Fig. 1) may send the probe request including the request to identify message, e.g., as described above.

As shown in Fig. 3, docking station 340 may receive request 356 and may cause (357) a display device 346 to display an identification message including the identification of docking station 340. For example, wireless docking station 140 (Fig. 1) may cause display device 146 (Fig. 1) to display the identification message, e.g., as described above.

As shown in Fig. 3, docking station 340 may transmit an identify acknowledgment 358 to mobile device 320, e.g., in response to request 356. For example, wireless docking station 140 (Fig. 1) may transmit a probe response including the identify acknowledgment to mobile device 120 (Fig. 1), e.g., as described above.

As shown in Fig. 3, docking station 340 and mobile device 320 may perform any other operation 359, for example, pairing between mobile device 320 and docking station 340.

Reference is made to Fig. 4, which schematically illustrates an information element (IE) 400, in accordance with some demonstrative embodiments.

In some demonstrative embodiments, IE 400 may be included as part of a message communicated between mobile device 120 (Fig. 1) and wireless docking station 140 (Fig. 1).

In some demonstrative embodiments, mobile device 120 (Fig. 1) may transmit IE 400 as part of a probe request to wireless docking station 140 (Fig. 1).

In some demonstrative embodiments, wireless docking station 140 (Fig. 1) may transmit IE 400 as part of a probe response to mobile device 120 (Fig. 1).

As shown in Fig. 4, IE 400 may include one or more fields, e.g., an element identification (ID) field 402, a Length field 404, an organizationally unique identifier (OUI) ID filed 406, a type field 408, a sub-type field 410, and/or a data field 412.

As shown in Fig. 4, sub-type field 402 may include a value selected from a plurality of predefined values, e.g., based on a functionality of IE 400.

In some demonstrative embodiments, sub-type field 402 may include the value "0x00", for example, to request a wireless docking device to identify.

In one example, mobile device 120 (Fig. 1) may transmit to wireless docking station 140 (Fig. 1) a message, e.g., a probe request, including IE 400 having filed 402 set to the value "0x00", for example, to request wireless docking station 140 (Fig. 1) to identify.

In some demonstrative embodiments, sub-type field 402 may include the value "0x01", for example, to acknowledge the request to identify.

In one example, wireless docking station 140 (Fig. 1) may transmit to mobile device 120 (Fig. 1) a message, e.g., a probe response, including IE 400 having field 402 set to the value "0x01", for example, to acknowledge the request to identify.

In some demonstrative embodiments, sub-type field 402 may include the value "0x02", for example, as a negative-acknowledge (nack) or rejection of the request to identify.

In one example, wireless docking station 140 (Fig. 1) may transmit to mobile device 120 (Fig. 1) a message, e.g., a probe response, including IE 400 having field 402 set to the value "0x02", for example, to indicate a nack of the request to identify.

In some demonstrative embodiments, sub-type field 402 may include the value "0x03", for example, to request to connect and to associate.

In one example, mobile device 120 (Fig. 1) may transmit to wireless docking station 140 (Fig. 1) a message including IE 400 having field 402 to include the value "0x03", for example, to request to connect and associate between mobile device 120 (Fig. 1) and wireless docking station 140 (Fig. 1).

In some demonstrative embodiments, sub-type field 402 may include the value "0x04", for example, to indicate a discovery only mode.

In one example, wireless docking station 140 (Fig. 1) may transmit to mobile device 120 (Fig. 1) a message including IE 400 having the value "0x04", for example, to indicate that wireless docking device 140 (Fig. 1) supports only discovery of wireless docking station 140 (Fig. 1).

In some demonstrative embodiments, the fields of IE 400 may be transmitted in an increased order, e.g., field 402 may be transmitted first.

In some demonstrative embodiments, a field of IE 400 having a size greater than a single octet may be transmitted according to a least significant Byte (LSB).

In some demonstrative embodiments, OUI field 406 may be transmitted according to a most significant Byte (MSB), for example, even if the size of the OUI field 406 is greater than a single octet.

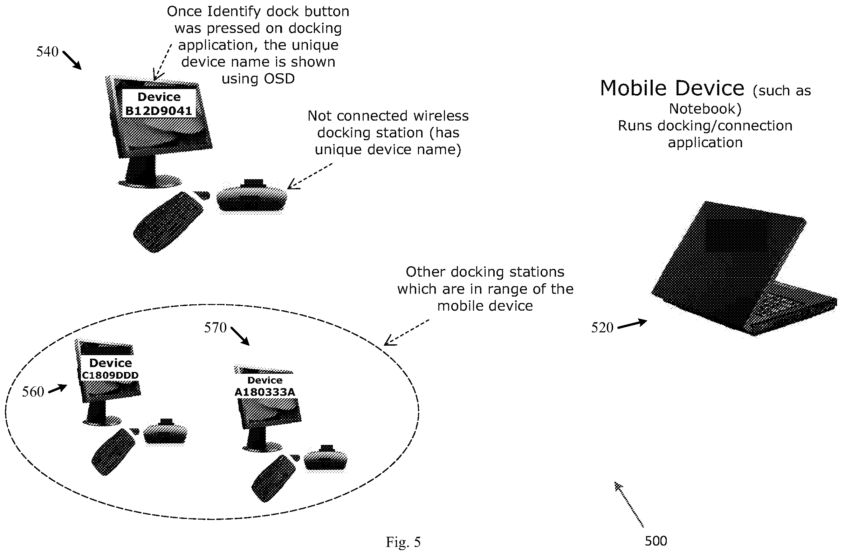

Reference is made to Fig. 5, which schematically illustrates a deployment of a system 500, in accordance with some demonstrative embodiments. For example, system 500 may perform the functionality of system 100 (Fig. 1).

In some demonstrative embodiments, system 500 may include a mobile device 520 and one or more wireless docking stations, e.g., a wireless docking station 540, a wireless docking station 560, and/or a wireless docking station 570. For example, mobile device 520 may perform the functionality of mobile device 120 (Fig. 1), wireless docking station 540 may perform the functionality of wireless docking station 140 (Fig. 1), wireless docking station 560 may perform the functionality of wireless docking station 160 (Fig. 1), and/or wireless docking station 570 may perform the functionality of wireless docking station 170 (Fig. 1).

As shown in Fig. 5, each of wireless docking stations 540, 560 and/or 570 may be embedded inside a display and may be wirelessly connected to a keyboard, a mouse, and/or a printer, for example, to enable an improved user experience of a user utilizing wireless docking stations 540, 560 and/or 570.

In some demonstrative embodiments, each of wireless docking stations 540, 560 and/or 570 may have a unique device name to identify wireless docking stations 540, 560 and/or 570.

As shown in Fig. 5, wireless docking stations 540, 560 and/or 570 may be located at a relatively close range to mobile device 520, which enables mobile device 520 to detect wireless docking stations 540, 560 and/or 570. Accordingly, mobile device 520 may display to a user of mobile device 520 a scan list including the unique device name of each device of wireless docking stations 540, 560 and/or 570. For example, mobile device 520 may display scan list 230 (Fig. 2).

In some demonstrative embodiments, the user of mobile device 520 may press the identify dock bottom 232 (Fig. 2).

As shown in Fig. 5, once the user presses the identify dock bottom 232 (Fig. 2), the unique device name of each of wireless docking stations 540, 560 and/or 570 may be displayed using on screen display (OSD). For example, wireless docking station 540 may display the unique name 545 of wireless docking station 540, e.g., "B112D9041".

Accordingly, the user of mobile device 520 may identify wireless docking station 540 and may connect to wireless docking station 540.

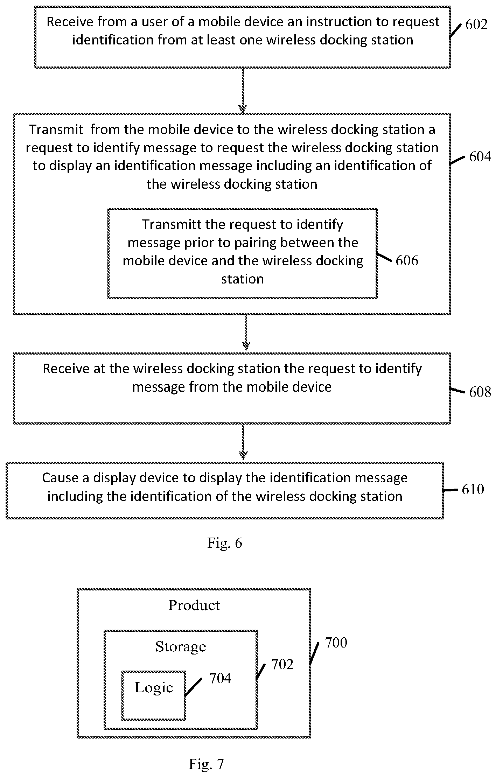

Reference is now made to Fig. 6, which schematically illustrates a method of identifying a wireless docking station, in accordance with some demonstrative embodiments. For example, one or more of the operations of the method of Fig. 6 may be performed by a wireless communication system, e.g., system 100 (Fig. 1); a wireless docking device, e.g., wireless docking stations 140, 160, 170 and/or 180 (Fig. 1); a mobile device, e.g., mobile device 120 (Fig. 1); a docking controller, e.g., docking controller 147 (Fig. 1); a docking identification controller, e.g., docking identification controller 124 (Fig. 1); and/or a radio, e.g., radio 117 and/or radio 147 (Fig. 1).

As indicated at block 602, the method may include receiving from a user of a mobile device an instruction to request identification from at least one wireless docking station. For example, docking identification controller 124 (Fig. 1) may receive from the user of mobile device 120 (Fig. 1) the instruction to request identification from wireless docking station 140 (Fig. 1), e.g., as described above.

As indicated at block 604, the method may include transmitting from the mobile device to the wireless docking station a request to identify message to request the wireless docking station to display an identification message including an identification of the wireless docking station. For example, radio 117 (Fig. 1) may transmit a probe request including the request to identify message to wireless docking station 140 (Fig. 1), e.g., as described above.

As indicated at block 604, transmitting the request to identify message may include transmitting the request to identify message prior to pairing between the mobile device and the wireless docking station. For example, radio 117 (Fig. 1) may transmit the request to identify message to wireless docking station 140 (Fig. 1) before pairing mobile device 120 (Fig. 1) with wireless docking station 140 (Fig. 1), e.g., as described above.

As indicated at block 608, the method may include receiving the request to identify message from the mobile device at the wireless docking station. For example, wireless docking station 140 (Fig. 1) may receive the request to identify message from mobile device 120 (Fig. 1), e.g., as described above.

As indicated at block 610, the method may include, in response to the request to identify, causing a display device to display the identification message including the identification of the wireless docking station. For example, in response to the request to identify from mobile device 120 (Fig. 1), docking controller 144 (Fig. 1) may cause display device 146 (Fig. 1) to display the identification message in response to the request to identify from mobile device 120 (Fig. 1), e.g., as described above.

Reference is made to Fig. 7, which schematically illustrates a product of manufacture 700, in accordance with some demonstrative embodiments. Product 700 may include a non-transitory machine-readable storage medium 702 to store logic 704, which may be used, for example, to perform at least part of the functionality of mobile device 120 (Fig. 1), wireless docking stations 140, 160, 170, and/or 180 (Fig. 1), radio 117 (Fig. 1), radio 147 (Fig. 1), docking controller 144 (Fig. 1), docking identification controller 124 (Fig. 1), and/or to perform one or more operations of the method of Fig. 6. The phrase "non-transitory machine-readable medium" is directed to include all computer-readable media, with the sole exception being a transitory propagating signal.

In some demonstrative embodiments, product 700 and/or machine-readable storage medium 702 may include one or more types of computer-readable storage media capable of storing data, including volatile memory, non-volatile memory, removable or non-removable memory, erasable or non-erasable memory, writeable or re-writeable memory, and the like. For example, machine-readable storage medium 702 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative embodiments, logic 704 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative embodiments, logic 704 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Matlab, Pascal, Visual BASIC, assembly language, machine code, and the like.

## Claims

1. A mobile device (120) comprising:
a user interface (126) configured to provide a user with a list of identifications and user-assigned profile names of a plurality of wireless docking stations (140) detected during scanning, and to receive from said user an instruction to request identification from one of the wireless docking stations (140) from said list; and
a radio (117) configured to transmit a request to identify message to said wireless docking station (140), the request to identify message is to request said wireless docking station (140) to display an identification message including the identification of said wireless docking station (140).

2. The mobile device (120) of claim 1, wherein said (117) radio is configured to transmit to said wireless docking station (140) a request including said request to identify message.

3. The mobile device (120) of claim 1 or 2, wherein said radio (117) is configured (126) to transmit said request to identify message prior to pairing between said mobile device and said wireless docking station (140).

4. The mobile device (120) of any one of claims 1-3, wherein said user interface (117) is configured to display to said user said scan list including the identification of said wireless docking station (140), and a profile name assigned by the user to the wireless docking station (140).

5. The mobile device (120) of any one of claims 1-4, wherein said radio (117) is configured to receive from said wireless docking station an identify acknowledgement in response to said request to identify message.

6. The mobile device (120) of claim 5, wherein said radio is to receive from said wireless docking station a probe response including said identify acknowledgement.

7. The mobile device of any one of claims 1-6, wherein, responsive to the instruction to request identification, said radio is configured to transmit a plurality of request to identify messages to said plurality of wireless docking stations (140).

8. The mobile device (120) of any one of claims 1-7, wherein said user interface comprises a graphical user interface, GUI (126).

9. The mobile device (120) of claim 8, wherein said GUI (162) includes a request to identify button to receive said instruction.

10. The mobile device (120) of any one of claims 1-9, wherein said identification message comprises a Service Set Identifier, SSID, of said wireless docking station (140), or a Peer to Peer, P2P, device name of said wireless docking station (140).

11. A method comprising:
providing at a mobile device (120) a user with a list of identifications and user-assigned profile names of a plurality of wireless docking stations (140);
receiving at said mobile device (120) from said user an instruction to request identification from one of the wireless docking stations (140);
receiving at the wireless docking station (140) a request to identify message from said mobile device (120); and
in response to said request to identify message, causing a display device to display an identification message including the identification of said wireless (146) docking station (120).

12. The method of claim 11 comprising receiving from said mobile device (120) a pairing request subsequent to causing the display of the identification message.

13. The method of claim 11 or 12, wherein said identification message comprises a pairing key to pair between said wireless docking station (140) and said mobile device (120).

14. A product including a non-transitory storage medium having stored thereon instructions that, when executed by a machine, result in the method of any one of claims 11-13.

## Patentansprüche

1. Mobile Vorrichtung (120), umfassend:
eine Benutzerschnittstelle (126), die konfiguriert ist, um einem Benutzer eine Liste von Identifikationen und Benutzer-Zugewiesene Profilnamen einer Vielzahl von drahtlosen Andockstationen (140), die während Scannen erkannt wird, bereitzustellen, und von dem Benutzer eine Anweisung zu empfangen, um Identifizierung von einer der drahtlosen Andockstationen (140) aus der Liste anzufragen; und
ein Funkgerät (117), das konfiguriert ist, um eine Anforderung zum Identifizieren von Nachricht an die drahtlose Andockstation (140) zu übertragen, wobei die Anforderung zur Identifizierung einer Nachricht darin besteht, die drahtlose Andockstation (140) anzufragen, eine Identifizierungsnachricht, die die Identifizierung der drahtlosen Andockstation (140) beinhaltet.

2. Mobile Vorrichtung (120) nach Anspruch 1, wobei das Funkgerät (117) konfiguriert ist, um an die drahtlose Andockstation (140) eine Anforderung zu übertragen, die die Anforderung zum Identifizieren von Nachricht beinhaltet.

3. Mobile Vorrichtung (120) nach Anspruch 1 oder 2, wobei das Funkgerät (117) konfiguriert (126) ist, um die Anforderung zum Identifizieren von Nachricht vor Paarung zwischen der mobilen Vorrichtung und der drahtlosen Andockstation (140).

4. Mobile Vorrichtung (120) nach einem der Ansprüche 1-3, wobei die Benutzerschnittstelle (117) konfiguriert ist, um dem Benutzer die Scan-Liste anzuzeigen die die Identifizierung der drahtlosen Andockstation (140), und einen Profilnamen beinhaltet, der der drahtlosen Andockstation (140) von dem Benutzer zugewiesen wurde.

5. Mobile Vorrichtung (120) nach einem der Ansprüche 1-4, wobei das Funkgerät (117) konfiguriert ist, von der drahtlosen Andockstation eine Identifizierungsbestätigung empfängt, als Antwort auf die Anforderung zur Identifizierung von Nachricht.

6. Mobile Vorrichtung (120) nach Anspruch 5, wobei das Funkgerät von der drahtlosen Andockstation eine Sondenantwort empfangen soll, die die Identifizierungsbestätigung beinhaltet.

7. Mobile Vorrichtung nach einem der Ansprüche 1-6, wobei das Funkgerät als Reaktion auf die Anweisung, Identifizierung anzufordern, konfiguriert ist, um eine Vielzahl von Anforderungen zum Identifizieren von Nachrichten an die Vielzahl von drahtlosen Andockstationen (140) zu übertragen.

8. Mobile Vorrichtung (120) nach einem der Ansprüche 1-7, wobei die Benutzerschnittstelle eine graphische Benutzerschnittstelle, GUI (126), umfasst.

9. Mobile Vorrichtung (120) nach Anspruch 8, wobei die GUI (162) eine Anforderung zum Identifizieren von Schaltfläche zum Empfangen der Anweisung beinhaltet.

10. Mobile Vorrichtung (120) nach einem der Ansprüche 1-9, wobei die Identifikationsnachricht einen Service Set Identifier, SSID, der drahtlosen Andockstation (140) oder einen Peer-to-Peer, P2P, Vorrichtungsnamen der drahtlosen Andockstation (140) umfasst.

11. Verfahren umfassend:
Bereitstellen, an einer mobilen Vorrichtung (120), einem Benutzer, einer Liste von Identifikationen und Benutzer-Zugewiesenen Profilnamen einer Vielzahl von drahtlosen Andockstationen (140);
Empfangen, an der mobilen Vorrichtung (120), von dem Benutzer einer Anweisung, eine Identifizierung von einer der drahtlosen Andockstationen (140) anzufordern;
Empfangen, an der drahtlosen Andockstation (140) einer Anforderung zum Identifizieren von Nachricht von der mobilen Vorrichtung (120); und
als Antwort auf die Anforderung zum Identifizieren von Nachricht, Veranlassen einer Anzeigevorrichtung, eine Identifizierungsnachricht anzuzeigen, die die Identifizierung der drahtlosen (146) Andockstation (120) beinhaltet.

12. Verfahren nach Anspruch 11 umfassend Empfangen, von der mobilen Vorrichtung (120) einer Paarungsanforderung nachdem die Anzeige der Identifizierungsnachricht veranlasst wurde.

13. Verfahren nach Anspruch 11 oder 12, wobei die Identifikationsnachricht einen Paarungsschlüssel zum Paaren zwischen der drahtlosen Andockstation (140) und der mobilen Vorrichtung (120) umfasst.

14. Produkt, das ein nicht-flüchtiges Speichermedium mit darauf gespeicherten Anweisungen beinhaltet, die, wenn sie von einer Maschine ausgeführt werden, zu dem Verfahren nach einem der Ansprüche 11-13 führen.

## Revendications

1. Un dispositif mobile (120) comprenant :
une interface utilisateur (126) configurée pour fournir à un utilisateur une liste d'identifications et de noms de profil assignés par utilisateur pour une pluralité de stations d'accueil sans fil (140) détectées pendant un balayage, et pour recevoir en provenance dudit utilisateur une instruction de requête d'identification de l'une des stations d'accueil sans fil (140) de ladite liste ; et
une radio (117) configurée pour transmettre un message de requête d'identification à ladite station d'accueil sans fil (140), le message de requête d'identification étant destiné à requérir ladite station d'accueil sans fil (140) d'afficher un message d'identification incluant l'identification de ladite station d'accueil sans fil (140) .

2. Le dispositif mobile (120) selon la revendication 1, dans lequel ladite radio (117) est configurée pour transmettre à ladite station d'accueil sans fil (140) une requête incluant ledit message de requête d'identification.

3. Le dispositif mobile (120) selon la revendication 1 ou 2, dans lequel ladite radio (117) est configurée pour transmettre ledit message de requête d'identification avant l'appariement entre ledit dispositif mobile et ladite station d'accueil sans fil (140).

4. Le dispositif mobile (120) selon l'une des revendications 1 à 3, dans lequel ladite interface utilisateur (126) est configurée pour afficher audit utilisateur ladite liste de balayage incluant l'identification de ladite station d'accueil sans fil (140), et un nom de profil assigné par l'utilisateur à la station d'accueil sans fil (140).

5. Le dispositif mobile (120) selon l'une des revendications 1 à 4, dans lequel ladite radio (117) est configurée pour recevoir en provenance de ladite station d'accueil sans fil un accusé de réception d'identification en réponse audit message de requête d'identification.

6. Le dispositif mobile (120) selon la revendication 5, dans lequel ladite radio doit recevoir en provenance de ladite station d'accueil sans fil une réponse de sonde incluant ledit accusé de réception d'identification.

7. Le dispositif mobile selon l'une quelconque des revendications 1 à 6, dans lequel, en réponse à l'instruction de requête d'identification, ladite radio est configurée pour transmettre une pluralité de messages de requête d'identification à ladite pluralité de stations d'accueil sans fil (140).

8. Le dispositif mobile (120) selon l'une des revendications 1 à 7, dans lequel ladite interface utilisateur comprend une interface utilisateur (126) graphique, GUI.

9. Le dispositif mobile (120) selon la revendication 8, dans lequel ladite GUI (162) comprend un bouton de requête d'identification pour recevoir ladite instruction.

10. Le dispositif mobile (120) selon l'une des revendications 1 à 9, dans lequel ledit message d'identification comprend un identificateur d'ensemble de services, SSID, de ladite station d'accueil sans fil (140), ou un nom de dispositif pair à pair, P2P, de ladite station d'accueil sans fil (140).

11. Un procédé comprenant :
la mise à la disposition d'un utilisateur au niveau d'un dispositif mobile (120) d'une liste d'identifications et de noms de profil assignés par utilisateur pour une pluralité de stations d'accueil sans fil (140) ;
la réception au niveau dudit dispositif mobile (120) en provenance dudit utilisateur d'une instruction de requête d'identification de l'une des stations d'accueil sans fil (140) ;
la réception au niveau de la station d'accueil sans fil (140) d'un message de requête d'identification en provenance dudit dispositif mobile (120) ; et
en réponse audit message de requête d'identification, le fait d'amener un dispositif d'affichage (146) à afficher un message d'identification incluant l'identification de ladite station d'accueil sans fil (140).

12. Le procédé selon la revendication 11, comprenant la réception en provenance dudit dispositif mobile (120) d'une requête d'appariement après avoir fait en sorte d'afficher le message d'identification.

13. Le procédé selon la revendication 11 ou 12, dans lequel ledit message d'identification comprend une clé d'appariement pour l'appariement entre ladite station d'accueil sans fil (140) et ledit dispositif mobile (120).

14. Un produit incluant un support de stockage non transitoire sur lequel sont stockées des instructions qui, lorsqu'elles sont exécutées par une machine, conduisent au procédé selon l'une des revendications 11 à 13.
